(19) Europäisches Patentamt / European Patent Office / Office européen des brevets

(11) **EP 4 046 784 B1**

(12) **FASCICULE DE BREVET EUROPEEN**

(45) Date de publication et mention
de la délivrance du brevet:
**21.08.2024 Bulletin 2024/34**

(21) Numéro de dépôt: **21305215.2**

(22) Date de dépôt: **23.02.2021**

(51) Classification Internationale des Brevets (IPC):
**B29D 11/00** (2006.01)

(52) Classification Coopérative des Brevets (CPC):
**G02B 5/1852; B29D 11/00663; B29D 11/00932;
G02B 27/0081; G02B 27/0172;** G02B 6/0038

(54) **PROCEDE DE FABRICATION D'UN ENSEMBLE DE MICROSTRUCTURES DE GUIDE OPTIQUE**

VERFAHREN ZUR HERSTELLUNG EINER GESAMTHEIT VON MIKROSTURKTUREN EINES LICHTWELLENLEITERS

METHOD FOR MANUFACTURING A SET OF OPTICAL GUIDE MICROSTRUCTURES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**24.08.2022 Bulletin 2022/34**

(73) Titulaire: **Optinvent**
**35700 Rennes (FR)**

(72) Inventeurs:
• **SARAYEDDINE, Khaled**
**35700 RENNES (FR)**
• **JULIEN, Simon**
**35700 RENNES (FR)**
• **LIU, Yao**
**35700 RENNES (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A1- 0 440 578        CN-A- 110 244 399
US-A1- 2014 140 091     US-B2- 10 203 437
US-B2- 9 207 662**

• JIANG JIANKAI ET AL: "Novel tool offset fly cutting straight-groove-type micro structure arrays", JOURNAL OF MATERIALS PROCESSING TECHNOLOGY, ELSEVIER, NL, vol. 288, 12 September 2020 (2020-09-12), XP086321797, ISSN: 0924-0136, [retrieved on 20200912], DOI: 10.1016/J.JMATPROTEC.2020.116900

**Description**

DOMAINE TECHNIQUE

La présente invention concerne le domaine de la fabrication de microstructures de guides optiques servant à extraire des images injectées et transportées dans ces guides optiques.

ETAT DE LA TECHNIQUE ANTERIEURE

Un guide optique sert à transporter, par réflexions totales internes successives, des signaux lumineux constituant une image injectée depuis une zone d'injection vers une zone d'extraction. Le guide optique étant formé d'un matériau transparent (plastique, verre), les réflexions totales internes successives des signaux lumineux s'opèrent dans une zone de guidage typiquement sous forme d'une lame à faces parallèles. On trouve de tels guides optiques intégrés à des systèmes de vision oculaire plus communément appelés lunettes informatives.

L'image à transporter est injectée dans le guide optique grâce à un dispositif de collimation accolé au guide au niveau de la zone d'injection. Le dispositif de collimation comporte une source d'image lumineuse fournissant l'image. La source d'image lumineuse est par exemple de type LCoS (« Liquid Crystal on Silicon » en anglais), LCD (« Liquid Cristal Display » en anglais) ou OLED (« Organic Light-Emitting Diode » en anglais), µLED (« Micro Light Emitting Diode » en anglais) ou MOEMS (« Micro Opto Electro Mechanical System » en anglais). Le dispositif de collimation comporte en outre un système optique à base de lentilles, et éventuellement de miroirs, qui permet de projeter cette image sous forme d'un faisceau collimaté, qui est ensuite introduit dans le guide optique par la zone d'injection.

La zone d'extraction comporte un ensemble de microstructures constituant un réseau de réflecteurs semi-réfléchissants parallèles entre eux, en surface du guide optique. Ces microstructures sont constituées des prismes ayant un angle adapté, permettant la sortie du faisceau lumineux du guide optique vers l'œil d'un utilisateur.

Un agencement semblable est présenté dans le document de brevet WO 2009/074638 A1. Dans le même principe, la **Fig. 1** illustre schématiquement un agencement, où un ensemble de microstructures juxtaposées forment une zone d'extraction de guide optique. Y est présentée une portion de guide optique 100 comportant des microstructures 101 formant un réseau de réflecteurs semi-réfléchissants en surface du guide optique. Ces microstructures 101 sont des prismes en creux et en saillie, et sont constituées d'une alternance de surfaces 103 et 102 inclinées par rapport à la face opposée du guide optique. Les surfaces 103 forment conjointement, grâce à un dépôt (« coating » en anglais) semi-réfléchissant, la surface d'extraction des images injectées dans le guide optique, c'est-à-dire le réseau de réflecteurs susmentionné. On parle ici de surfaces actives A. Les surfaces 102 forment conjointement la surface transparente permettant, grâce à une pièce de couverture (« cover pièce » en anglais) abordée ci-après, d'obtenir un effet de vision à travers (« see-through » en anglais), complétée par le caractère semi-réfléchissant des surfaces actives A. On parle ici de surfaces passives B.

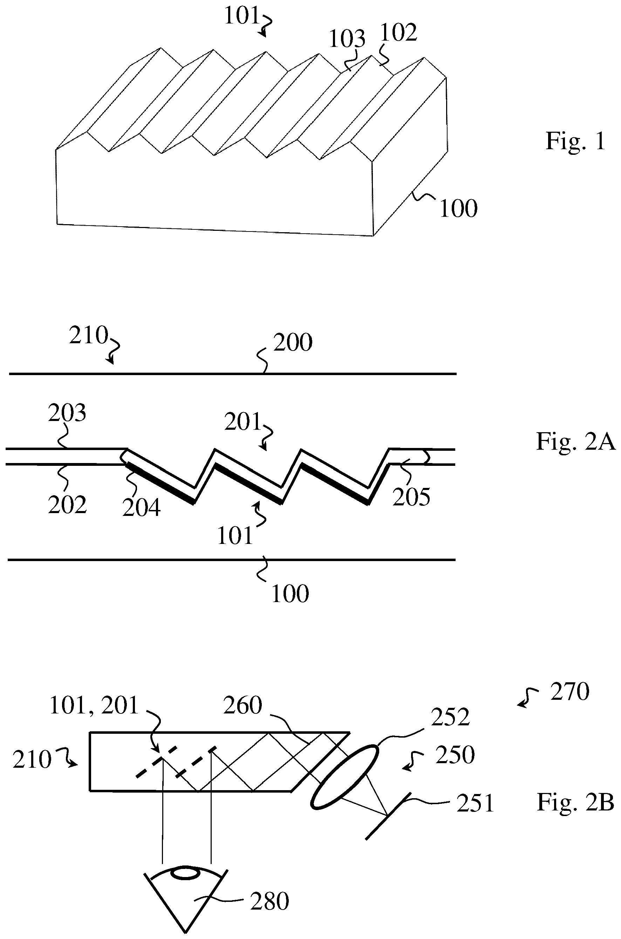

Un autre agencement, permettant d'obtenir l'effet de vision à travers est présenté dans le document de brevet WO 2012/136470 A1. Cela permet de voir l'image transportée par le faisceau lumineux en superposition de la scène au-delà du guide optique. La vision de la scène à travers est notamment permise par le caractère semi-réfléchissant du réseau de réflecteurs. Cet agencement comporte une première pièce 100 de guide optique avec une zone d'extraction composée de microstructures 101 en substance selon le schéma de la Fig. 1. L'agencement décrit introduit une deuxième pièce 200 du guide optique, aussi appelée « pièce de couverture » (« cover pièce » en anglais), comportant en surface des microstructures 201 de forme complémentaire aux microstructures 101 de ladite section d'extraction, comme schématiquement illustré sur la **Fig. 2A.** Y apparaît un guide optique 210 résultant d'un assemblage de la première pièce 100 et de la deuxième pièce 200. Y apparaît aussi le dépôt semi-réfléchissant 204 évoqué ci-avant. De plus, une couche de colle 205 s'étend au moins entre les microstructures 101 et 201, de sorte que toute microstructure 101 de ladite section d'extraction est séparée de sa microstructure complémentaire 201 par un milieu transparent d'épaisseur substantiellement constante.

Les microstructures de tels guides optiques peuvent être fabriquées par usinage, mais sont généralement fabriquées grâce à une technique de moulage par injection plastique (« injection molding » en anglais), de moulage par injection et compression (« compression injection molding » en anglais), de formage à chaud (« hot embossing » en anglais) ou enfin par une technique de formage thermique, ou de formage par rayonnement ultraviolet, de monomères. Pour cela, une empreinte (aussi appelée « insert ») métallique (par exemple en acier ou en aluminium) est fabriquée avec la forme négative de la structure du guide optique, afin de servir de moule (après typiquement application d'une couche de Nickel Phosphore pour les empreintes en acier). La fabrication de ce type d'insert doit se faire avec des méthodes très précises pour limiter au maximum les irrégularités de surface. Certaines applications impliquent des tolérances en dimensions de formes de surface bien inférieures à la longueur d'onde guidée $\lambda$ (par exemple, inférieure à $\lambda/5$) et aussi une rugosité très faible (par exemple, inférieure à 10 nm), afin d'avoir une bonne netteté d'image projetée. Aussi, les surfaces semi-réfléchissantes des microstructures, dont le rôle est d'extraire l'image vers l'oeil d'un utilisateur du guide optique, doivent être précisément réalisées. En effet, l'image guidée dans le guide optique par réflexions totales internes successives est collimatée à l'infini, comme schématiquement illustré sur la **Fig. 2B.** Y apparaît un dispositif optique 270 obtenu en adjoignant un dispositif de collimation 250 au guide optique 210. Le dispositif de collimation 250 comporte, comme déjà évoqué, une source d'image lumineuse 251 fournissant l'image à injecter dans la zone d'injection du guide optique 210 et un système optique à base de lentilles 252 projetant cette image sous forme d'un faisceau 260 collimaté à l'infini et transporté par réflexions internes successives dans le guide optique 210 jusqu'à la zone d'extraction obtenue grâce à la superposition des microstructures 101, 201. Grâce au dispositif optique 270 dispositif optique 270, l'effet de vision à travers (« see-through » en anglais) et la projection de l'image transportée sont obtenus de manière superposée dans l'oeil de l'utilisateur 280.

Ainsi, chaque pixel de l'image étant transporté dans le guide optique par un pinceau de rayons lumineux parallèles entre eux, l'image est donc guidée sous la forme de rayons lumineux parallèles, et un défaut de réalisation des microstructures peut engendrer un mélange de ces rayons lumineux avec ceux des pixels voisins, dégradant ainsi la qualité de l'image projetée.

La fabrication de ces inserts est un défi technique. Il existe des techniques qui consistent à former les microstructures par raclage grâce à un outil diamant dédié, où la découpe se fait par un ou deux côtés d'une pointe diamant, ou à mettre en rotation un disque de diamant (« diamond blade » en anglais) pour couper une surface entière d'un prisme. Ces techniques peuvent cependant s'avérer insuffisamment précises en termes de planéité et/ou de rugosité de surface. Pour plus de précision, il existe une technique d'usinage par pointe de diamant, nommée « Single Point Diamond Turn Cut ». Dans cette technique, une pointe fine de diamant (avec un rayon de courbure bien défini et calibré) coupe la surface du substrat par rotation de la pièce à couper. Le diamant bouge lentement pour imprimer la hauteur de découpe. On parle de « tournage diamant » (« diamond turning » en anglais). Cette technique est utilisée pour tailler des surfaces optiques à symétrie de révolution de très haute précision. En tournage diamant, le temps de découpe est fixé par la vitesse de rotation du tambour portant la pièce à couper. A 1000 tours par minute, le temps de parcours d'un tour est d'environ 60 ms. Avec un pas de découpe de 0,5 $\mu$m à chaque tour et une longueur à couper de 20 mm, alors le temps de découpe correspondant est de 40 minutes. Et plusieurs passes sont nécessaires pour fabriquer des composants optiques à symétrie de révolution, ou leurs inserts correspondants.

Le temps de fabrication par usinage par pointe de diamant augmente considérablement lorsque des structures prismatiques à surfaces planes parallèles, comme celle de la Fig. 1, sont à réaliser. En effet, pour réaliser de telles formes, un autre processus d'usinage est utilisé : l'usinage diamant en ligne droite, grâce typiquement à un étau limeur. Contrairement au tournage diamant, l'usinage diamant en ligne droite est un processus beaucoup plus long que le tournage diamant. La raison est que pour chaque ligne de balayage du diamant, ce dernier doit s'arrêter et repartir dans une direction opposée, ce qui augmente donc le temps de balayage de chaque passage. Typiquement ce type de fabrication est décrit par le document US 2014/140091 qui propose un ensemble de microstructures de guide optique fabriqué en utilisant une méthode classique d'usinage diamant. Ainsi, un insert peut mettre jusqu'à plusieurs semaines voire plusieurs mois pour sa fabrication. De plus, ce type d'usinage souffre d'une dérive de calibration au cours du temps qui est due à la variation de température de l'environnement, ce qui soit nuit à la qualité des surfaces, soit nécessite des opérations de recalibration.

La problématique se pose donc de fournir une solution pour fabriquer un ensemble de microstructures de guide optique formant un réseau de réflecteurs destiné à permettre une extraction de signaux lumineux transportés dans le guide optique, avec une qualité de surfaçage équivalente à l'usinage diamant, mais avec un temps de réalisation plus court. Il est souhaitable de fournir une solution qui convienne à la fabrication de microstructures de guide optique au plus proche de celles divulguées dans les documents de brevet WO 2009/074638 A1 (schématiquement repris en Fig. 1) et WO 2012/136470 A1 (schématiquement repris en Fig. 2A).

EXPOSE DE L'INVENTION

Il est proposé un procédé de fabrication d'un ensemble de microstructures de guide optique, ou de son insert de moulage, par emploi d'un poste de tournage diamant muni d'un tambour actionnable en rotation autour d'un axe C et d'une pointe diamant, chaque microstructure étant de forme prismatique à deux surfaces avec une première surface appelée ici surface active destinée à recevoir un traitement semi-réfléchissant pour extraire une image injectée et propagée par réflexions totales internes successives dans le guide optique et une seconde surface appelée surface passive sans traitement réfléchissant, les microstructures étant juxtaposées les unes aux autres, le procédé de fabrication comportant les étapes suivantes :

- installer une pièce P à usiner sur le tambour comme suit : la pièce à usiner P est décalée d'une distance D de l'axe de rotation du tambour, la distance D étant la distance qui sépare l'axe C et un repère fixe relativement à l'ensemble de microstructures à usiner; et la pièce à usiner P est placée de telle sorte qu'il y a un angle moyen Thêta entre l'axe C et un profil de découpe correspondant aux surfaces actives, l'angle Thêta étant comme suit :

$$\text{Thêta} = \arccos{(D / Ry)}$$

où Ry est un rayon de courbure souhaitée selon la direction longue des microstructures ;

- déplacer la pointe diamant selon le profil de découpe des microstructures en actionnant la rotation du tambour de sorte à usiner l'ensemble des microstructures en surface de la pièce à usiner P.

Ainsi, en positionnant la pièce à usiner P de cette manière, il est possible de réaliser par tournage diamant des microstructures très proches de celles discutées en partie introductive. La différence de forme est négligeable dans le domaine de l'optique. La qualité de surfaçage est équivalente à l'usinage diamant, mais l'emploi du tournage diamant réduit considérablement le temps de réalisation nécessaire.

Selon un mode de réalisation particulier, ledit repère fixe est le centre géométrique de l'ensemble de microstructures à usiner.

Selon un mode de réalisation particulier, le rayon Ry tend vers l'infini et la pièce P à usiner est placée selon un angle moyen Thêta égal à 90° de sorte à former des surfaces actives planes. Selon une variante, le profil de découpe des surfaces actives forme un arc de cercle d'un rayon Rx et la pièce P à usiner est placée selon un angle moyen Thêta inférieur à 90° de sorte à former des surfaces actives concaves. Selon une autre variante, le profil de découpe des surfaces actives forme un arc de cercle d'un rayon Rx et la pièce P à usiner est placée selon un angle moyen Thêta supérieur à 90° de sorte à former des surfaces actives convexes.

Selon un mode de réalisation particulier, le rayon Rx et le rayon Ry sont de même valeur. En variante, le rayon Rx et le rayon Ry sont de valeurs différentes.

Il est aussi proposé un procédé de fabrication d'un guide optique comportant les étapes suivantes : fabriquer une première pièce en surface de laquelle un ensemble de microstructures est formé en application du procédé évoqué ci-dessus ; appliquer un traitement semi-réfléchissant sur des surfaces des microstructures destinées à extraire une image injectée et propagée par réflexions totales internes successives dans le guide optique ; fabriquer une deuxième pièce en surface de laquelle est formé un ensemble de microstructures complémentaires aux microstructures de la première pièce ; coller la première pièce et la seconde pièce ensemble, les microstructures en surface de la première pièce étant collées en regard de leurs microstructures complémentaires en surface de la deuxième pièce.

Selon un mode de réalisation particulier, le procédé comporte les étapes suivantes pour fabriquer la deuxième pièce :

- installer une autre pièce P' à usiner sur le tambour comme suit : l'autre pièce à usiner P' est décalée d'une distance D' de l'axe de rotation du tambour, la distance D étant identique à la distance D utilisée pour fabriquer la première pièce ; et l'autre pièce à usiner P' est placée de telle sorte qu'il y a un angle moyen Oméga entre l'axe C et un autre profil de découpe correspondant aux surfaces destinées à être placée en regard des surfaces actives des microstructures de la première pièce, l'angle Oméga étant comme suit :

$$\text{Oméga} = \pi - \text{Thêta} = \pi - \arccos{(D / Ry)}$$

- déplacer la pointe diamant selon ledit autre profil de découpe des microstructures en actionnant la rotation du tambour de sorte à usiner l'ensemble des microstructures en surface de l'autre pièce à usiner P', ledit autre profil de découpe étant géométriquement complémentaire du profil de découpe utilisé pour usiner la première pièce.

Il est aussi proposé un procédé de fabrication d'un dispositif optique comportant les étapes suivantes : fabriquer un guide optique en application du procédé tel qu'évoqué ci-dessus ; et assembler le guide optique et un dispositif de collimation, de sorte que le dispositif de collimation injecte une image, sous forme de faisceau collimaté à l'infini, par une zone d'injection du guide optique, que cette image est transportée par réflexions totales internes successives jusqu'à une zone d'extraction du guide optique où les microstructures collées sont agencées pour extraire l'image du guide optique en superposition d'une vision à travers.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

- la Fig. 1 illustre schématiquement des microstructures de zone d'extraction de guide optique, selon l'état de la technique ;

- la Fig. 2A illustre schématiquement un autre agencement de zone d'extraction de guide optique, selon l'état de la technique ;
- la Fig. 2B illustre schématiquement un agencement de zone d'extraction de guide optique, selon l'état de la technique ;
- la Fig. 3 illustre schématiquement un poste de tournage diamant ;
- la Fig. 4 illustre schématiquement le placement, par rapport à un axe de rotation d'un tambour du poste de tournage diamant, de la surface d'une pièce à usiner pour former des microstructures de zones d'extraction de guide optique, selon un mode de réalisation de l'invention ;
- la Fig. 5 illustre schématiquement le suivi d'un profil de découpe par une pointe diamant ;
- la Fig. 6 illustre schématiquement des microstructures de zone d'extraction de guide optique, obtenues en opérant le poste de tournage diamant conformément à la Fig. 4 ;
- la Fig. 7 illustre schématiquement le placement, par rapport à l'axe de rotation du tambour du poste de tournage diamant, d'une pièce à usiner pour former une zone d'extraction de guide optique, selon un autre mode de réalisation de l'invention ;
- la Fig. 8 illustre schématiquement des microstructures de zone d'extraction de guide optique, obtenues en opérant le poste de tournage diamant conformément à la Fig. 7 ;
- la Fig. 9 illustre schématiquement le placement, par rapport à l'axe de rotation du tambour du poste de tournage diamant, d'une autre pièce à usiner, permettant de former sur sa surface des microstructures géométriquement complémentaires à celles obtenues en opérant le poste de tournage diamant conformément à la Fig. 7 ;
- la Fig. 10 illustre schématiquement une mise en regard de microstructures obtenues en opérant le poste de tournage diamant conformément à la Fig. 7 et microstructures géométriquement complémentaires obtenues en opérant le poste de tournage diamant conformément à la Fig. 9 ;
- la Fig. 11 illustre schématiquement des étapes de procédé de fabrication de microstructures de zone d'extraction de guide optique, ou d'insert pour le moulage de telles microstructures de zone d'extraction de guide optique ; et
- la Fig. 12 illustre schématiquement des étapes de procédé de fabrication d'un guide optique comportant deux pièces, une pièce comportant des microstructures de zone d'extraction obtenues en appliquant le procédé de la Fig. 11 et l'autre pièce comportant des microstructures géométriquement complémentaires.

## EXPOSE DETAILLE DE MODES DE REALISATION

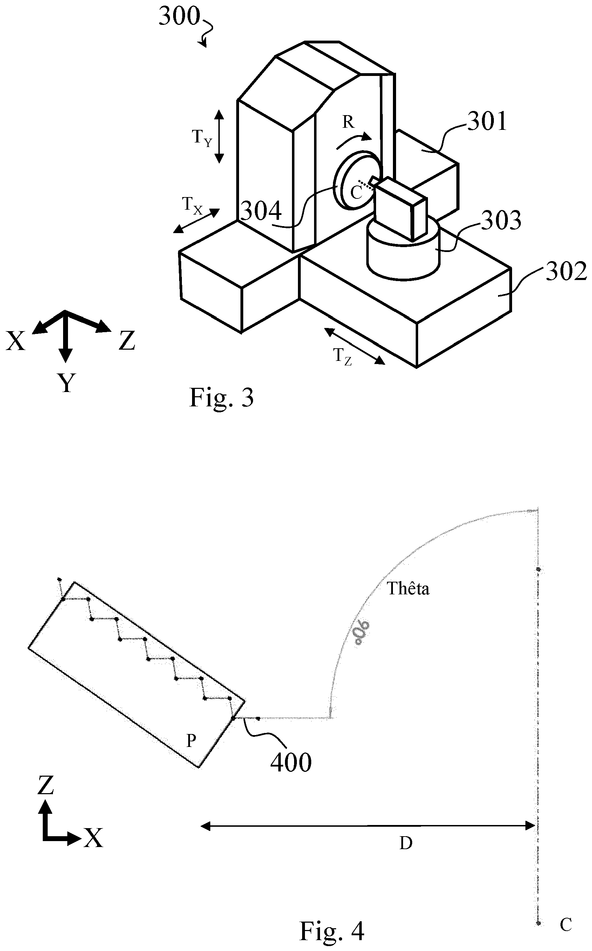

La **Fig. 3** illustre ainsi schématiquement un poste de tournage diamant 300. Le poste de tournage diamant comporte une première partie de châssis 301 comportant un tambour 304 sur lequel une pièce P à découper peut être fixée. Le tambour 304 peut être mû en rotation par rapport à la première partie de châssis 301 autour d'un axe C (par exemple horizontal) de manière à entraîner en rotation R la pièce P autour de l'axe C. Le poste de tournage diamant comporte une seconde partie de châssis 302 comportant un outil de découpe 303 avec pointe diamant.

L'outil de découpe 303 avec pointe diamant peut être déplacé et bloqué en rotation autour d'un axe perpendiculaire à l'axe C (par exemple vertical), de manière à pouvoir ajuster l'angle de présentation de l'outil de découpe 303 au regard de la pièce P en rotation.

La première partie de châssis 301 et la seconde partie de châssis 302 peuvent être déplacées en translation l'une par rapport à l'autre selon un repère orthonormé direct X, Y, Z. Ainsi, la première partie de châssis 301 peut effectuer des translations Tx selon l'axe X et des translations $T_Y$ selon l'axe Y, et la seconde partie de châssis 302 peut effectuer des translations Tz selon l'axe Z.

Comme avec toute machine à commande numérique, les déplacements de l'outil de découpe 303 relativement à la pièce P sont contrôlés par une liste de coordonnées horodatées générée par un ordinateur. En règle générale, la pièce à créer est d'abord décrite à l'aide d'un modèle CAO (« Conception Assistée par Ordinateur »), puis convertie en instructions interprétables par un contrôleur ou un processeur de la machine à commande numérique qui gère notamment les commandes de déplacements de l'outil de découpe 303 et/ou de la première partie de châssis 301 et/ou de la seconde partie de châssis 302.

Les déplacements de l'outil de découpe 303 relativement à la pièce P s'opèrent pas à pas (par exemple par pas de déplacement de 0,5 μm sur l'axe X et/ou sur l'axe Y et/ou sur l'axe Z) selon un profil de découpe, tel que schématiquement illustré sur la **Fig. 4,** où est présenté un profil de découpe 400 de microstructures pour zone d'extraction de guide optique. Le profil de découpe est le schéma reproduit sur toute la largeur de la pièce P selon une révolution autour de l'axe C (définition d'une opération de tournage). En suivant le profil de découpe 400, la partie haute de la pièce P sur la Fig. 4 est abrasée lors du tournage diamant.

La zone d'extraction, constituée d'un ensemble de microstructures prismatiques juxtaposées, est à former en surface du guide optique. Le profil de découpe peut s'appliquer directement au guide optique à créer ou à son insert (forme complémentaire).

Sur le schéma de la Fig. 4, la pièce à usiner P est placée de la façon suivante sur le poste de tournage diamant 300 :

- la pièce P est placée à une distance D de l'axe C de rotation du tambour 304, la distance D étant la distance qui sépare l'axe C et un repère fixe relativement à l'ensemble de microstructures à usiner. Préférentiellement, ce repère fixe est le centre géométrique de l'ensemble de microstructures à usiner, c'est-à-dire le centre géométrique de la zone d'extraction. Ce repère fixe peut être un autre point de repère de position prédéfinie relativement à l'ensemble de microstructures à usiner. Par exemple, un point sur un bord de l'ensemble des microstructures, ou un point aux abords de l'ensemble des microstructures sur la pièce P. Il convient de noter que la distance D est limitée par les capacités physiques du poste de tournage diamant 300, notamment la dimension du tambour 304, ainsi que par les dimensions de la pièce P.
- la pièce à usiner P est placée de telle sorte qu'il y a un angle Thêta = 90° entre l'axe C et le profil de découpe des surfaces actives A à former.

Ainsi, en considérant une pièce P parallélépipédique, la pièce P est inclinée par rapport au plan du tambour 304 (la pièce P est surélevée du côté extérieur du tambour 304).

La distance D est telle que l'ensemble des microstructures à usiner sont du même côté de l'axe de rotation C. La distance D est définie en fonction des capacités physiques du poste de tournage diamant 300 et des dimensions de la pièce P à usiner, de sorte à minimiser les variations d'épaisseur entre le milieu et les extrémités des microstructures (dans le sens de leur longueur). En effet, le placement de la pièce P par rapport à l'axe de rotation C du tambour 304, et l'usinage par tournage, font que l'épaisseur des microstructures diffère entre le milieu de chaque microstructure et ses extrémités. C'est une spécificité notable du procédé de fabrication divulgué ici.

Il est ainsi possible de créer une zone d'extraction de guide optique selon un schéma de microstructures prismatiques alternant surfaces actives A (destinées conjointement à l'extraction de l'image injectée) et surfaces passives B (destinées conjointement à la vision à travers), ou son insert correspondant. Le profil de chaque surface active A (ou de son profil d'insert) est perpendiculaire à l'axe de rotation C, ce qui permet d'obtenir une surface plane. La pièce à découper P est décalée par rapport à l'axe de rotation C, ce qui permet d'obtenir sans recalibration du poste de tournage diamant 300 des surfaces actives A qui soient planes et parallèles entre elles. Un contrepoids peut être placé sur le tambour 304 de façon adéquate afin de limiter les vibrations lors de la rotation de la pièce P autour de l'axe de rotation C. La surface active A de chaque microstructure ainsi formée est réalisée par la rotation de la pièce P autour de l'axe de rotation C et la translation de l'outil de découpe selon l'axe X. Il ne faut donc que deux mouvements de liberté pour créer chaque surface active A. Chaque surface passive B nécessite, quant à elle, 3 mouvements de liberté : la rotation autour de l'axe de rotation C de la pièce P et les translations de la pointe diamant selon les axes X et Z. Augmenter les mouvements de liberté nécessaires à la réalisation d'une surface augmente l'imprécision (ajout des tolérances de tous les mouvements de liberté nécessaires). Dans cette approche, le défaut de forme de surface est donc plus faible sur les surfaces actives A que sur les surfaces passives B, mais la rugosité de surface est de la même qualité.

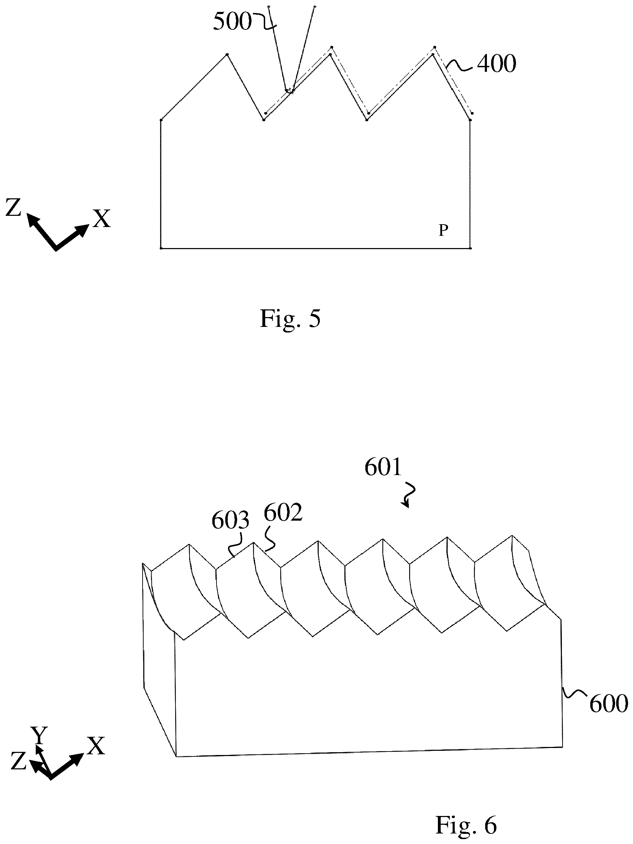

La Fig. 5 illustre schématiquement le suivi d'un profil de découpe par une pointe diamant 500. Comme montré sur la Fig. 5, la découpe réellement obtenue est légèrement décalée par rapport au profil de découpe 400 suivi par la pointe diamant 500. La pointe diamant 500 a en effet une forme légèrement arrondie et la trajectoire suivie par la pointe diamant 500 est décrite par rapport au centre de cet arrondi. Il est donc tenu compte de ce décalage lié à la forme arrondie de la pointe diamant 500 lors de la programmation du poste de tournage diamant 300.

La Fig. 6 illustre schématiquement des microstructures 601 obtenues en appliquant la configuration du poste de tournage diamant 300 montrée sur la Fig. 4, et en activant la rotation de la pièce P autour de l'axe C, puis en manoeuvrant l'outil de découpe 303 avec pointe diamant selon le profil de découpe 400. Le surfaces actives A 602 ainsi obtenues sont des tranches de disques et les surfaces passives B 603 ainsi obtenues sont des surfaces tronconiques ou cylindriques. Plus la pièce P est placée loin de l'axe C de rotation du tambour 304 (distance D), plus les microstructures 601 se rapprochent de microstructures droites.

Les formes ainsi obtenues par tournage diamant ne sont pas parfaitement planes, mais tronconiques (ou cylindriques) sur les surfaces passives B. Ces surfaces passives B ne sont pas destinées à être munies d'un traitement réfléchissant (ou semi-réfléchissant) et ne servent pas à l'extraction de l'image transportée dans le guide optique. Dans un mode préféré (comme détaillé plus loin), les microstructures de la zone d'extraction sont utilisées en plaçant en regard des microstructures géométriquement complémentaires afin de permettre un effet de vision à travers (« see-through » en anglais). Dans ce cas, les surfaces en regard desdites surfaces passives B sont aussi préférentiellement démunies de tout traitement réfléchissant (ou semi-réfléchissant). Alors, bien que ces surfaces passives B ne soient pas planes, leur superposition à des microstructures de formes complémentaires assure une totale et parfaite transparence des rayons traversant le guide optique pour la vision à travers.

Dans certaines applications, dans lesquelles l'image extraite doit être focalisée à une distance finie, les surfaces actives A peuvent être sphériques. Dans l'état de l'art, la progression du mouvement relatif de la pointe diamant avec la pièce P selon l'axe Z est alors synchronisé avec la rotation autour de l'axe C. La pointe diamant doit en effet se déplacer au cours de la rotation autour de l'axe C, pendant la découpe, afin de créer un profil sphérique ; et suivant l'axe X, la pointe diamant suit aussi un profil sphérique. Or, dans la présente invention, du fait que la pièce P est inclinée (lié à l'angle Thêta), il n'y a pas besoin de cette synchronisation, les mouvements selon l'axe Z ne sont alors pas synchronisés avec la rotation autour de l'axe C (au cours d'un même tour de révolution du tambour 304).

Il convient de noter que les machines à commande numérique sont limitées par 3 facteurs quant à leur déplacement sur l'axe Z : leur déplacement maximal, leur fréquence de fonctionnement et leur accélération. Par exemple, la machine « Fast Tool Servo FTS 5000 » de Precitech, qui est dédiée à ce genre d'applications, a un déplacement maximum de 5000 $\mu$m, une fréquence de fonctionnement de 440 Hz pour 100 $\mu$m de déplacement, et une accélération maximum de 400 m/s$^2$. Les machines conventionnelles ont quant à elles une accélération maximale beaucoup plus faible. Il pourrait falloir donc environ un mois pour usiner un insert de 40 mm de large, et par exemple autant de long, avec une machine ayant une grande accélération possible, telle que par exemple la machine « Fast Tool Servo FTS 5000 » de Precitech, et quasiment un an pour une machine conventionnelle. De tels temps de fabrication ne sont pas industriellement acceptables.

Il est toutefois possible de réduire considérablement ces temps de fabrication en recourant au tournage diamant. Dans ce cas, le profil de découpe des surfaces actives A forme un arc de cercle d'un rayon Rx (rayon selon l'axe X). Lorsque le profil de découpe de la surface active A est incliné d'un angle moyen Thêta inférieur à 90° par rapport à l'axe C de rotation du tambour 304 (et donc de la pièce P), le profil des surfaces actives A est concave. Lorsque le profil de découpe de la surface active A est incliné d'un angle moyen Thêta supérieur à 90° par rapport à l'axe C de rotation du tambour 304 (et donc de la pièce P), le profil des surfaces actives A est convexe.

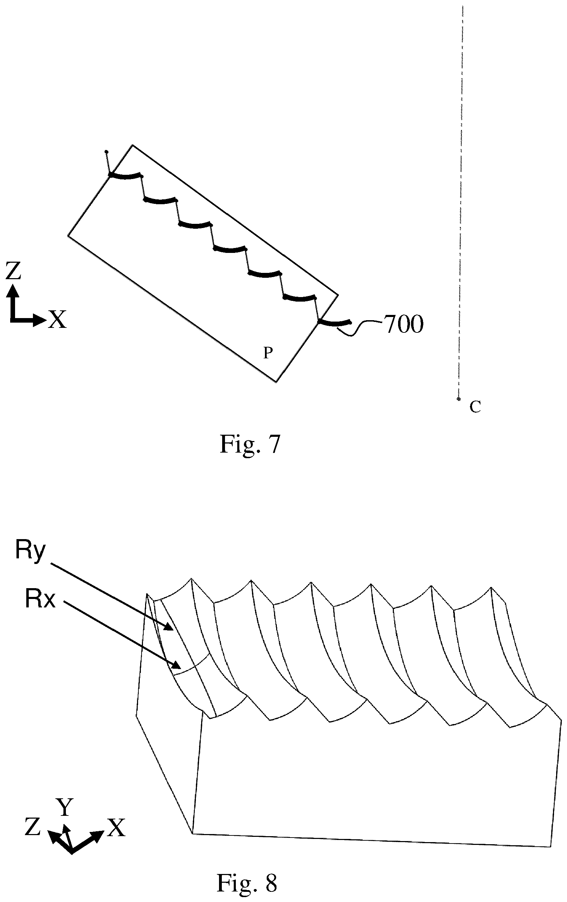

Les déplacements de l'outil de découpe 303 relativement à la pièce P s'opèrent ici aussi, pas à pas (par exemple par pas de déplacement de 0,5 $\mu$m sur l'axe X et/ou sur l'axe Y et/ou sur l'axe Z), selon un profil de découpe 700, tel que schématiquement illustré sur la **Fig. 7**. En suivant le profil de découpe 700, la partie haute de la pièce P sur la Fig. 7 est abrasée lors du tournage diamant. La **Fig. 8** illustre schématiquement des microstructures 801 obtenues en appliquant la configuration du poste de tournage diamant 300 montrée sur la Fig. 7, et en activant la rotation de la pièce P autour de l'axe C, puis en manoeuvrant l'outil de découpe 303 avec pointe diamant selon le profil de découpe 700.

La valeur de l'angle Thêta est à ajuster en fonction d'un rayon Ry (rayon selon l'axe Y) de courbure souhaitée selon la direction longue des microstructures et de la distance D entre l'axe C et le centre géométrique de l'ensemble de microstructures (zone d'extraction du guide optique) à usiner. Pour obtenir une surface sphérique (Rx = Ry), le centre du cercle de rayon Ry se situe sur l'axe C de rotation du tambour 304.

L'angle moyen Thêta est défini comme suit :

$$\text{Thêta} = \arccos(D / Ry)$$

On peut d'ailleurs noter que lorsque Ry tend vers l'infini (profil de découpe perpendiculaire à l'axe C), on retrouve Thêta = 90° comme dans la Fig. 4.

Etant donné que la distance D a été définie par rapport à un repère fixe de l'ensemble de microstructures à usiner, l'angle Thêta est en conséquence fixe pour l'ensemble des microstructures. Garder l'angle Thêta fixe permet de ne pas avoir à recalibrer le poste de tournage diamant 300 en passant de l'usinage d'une microstructure à l'usinage de la suivante. Les surfaces actives A ainsi obtenues sont donc des surfaces toriques très proches de surfaces sphériques, et présentent un léger astigmatisme, qui est négligeable en l'espèce. Cet astigmatisme est d'autant plus faible que le repère fixe utilisé pour définir la distance D (et, par conséquent, l'angle Thêta) est proche du centre géométrique de l'ensemble de microstructures à usiner.

Par exemple, pour obtenir une surface active A proche d'une portion de sphère d'un rayon de 300 mm, il faut avoir R = 100 mm, placer la pièce P pour découper la surface active à une distance D = 100 mm de l'axe C et avoir un angle Thêta de 70.55°. Cela entraîne une erreur de forme à 20 mm du centre géométrique (en considérant un insert de 40 x 40mm) d'environ 40 nanomètres, soit une erreur maximale de 0.4 mm sur le rayon de 300 mm. L'erreur de forme est de l'ordre de 0,13 %, ce qui est connu pour être remarquable dans le domaine de la fabrication de guides optiques.

Comme déjà indiqué, la distance D est telle que l'ensemble des microstructures à usiner sont du même côté de l'axe de rotation C ; de plus, la distance D est définie en fonction des capacités physiques du poste de tournage diamant 300 et des dimensions de la pièce P à usiner, de sorte à minimiser les variations d'épaisseur entre le milieu et les extrémités des microstructures (dans le sens de leur longueur). Ici encore, le placement de la pièce P par rapport à l'axe de rotation C du tambour 304, et l'usinage par tournage, font que l'épaisseur des microstructures diffère entre le milieu de chaque microstructure et ses extrémités.

Il est à noter donc que l'inscription sur les surfaces A et B de rayons de courbure d'une valeur déterminée est possible pour les deux directions, parallèle ou perpendiculaire à la direction de découpe, et ceci pour chaque prisme. Ainsi, il est possible d'inscrire un rayon de courbure Rx sur le profil de découpe formant l'angle Thêta avec l'axe C, et un autre rayon Ry différent suivant l'axe Y le long des microstructures. Ces rayons Rx et Ry peuvent être différents pour une même microstructure (prisme), car ils sont indépendants (réalisables par des déplacements selon des axes distincts dans le poste de tournage diamant). En effet, le rayon Rx est inscrit grâce au profil de découpe et le rayon Ry est déterminé par la valeur de l'inclinaison (« tilt » en anglais) de l'axe de découpe, à savoir Thêta. Etant donné que les surfaces actives A des microstructures ainsi obtenues peuvent avoir des valeurs de rayons Rx et Ry différentes, il est possible de corriger localement la vision de l'utilisateur du guide optique (et notamment un astigmatisme localisé). En effet, l'image extraite est pourvue d'une puissance optique (après réflexion sur la microstructure) qui pourra être traitée en chaque endroit de la zone d'extraction pour focaliser une image à une distance fixe pour un oeil parfait, ou bien de focaliser l'image à la même distance fixe en tenant compte d'une correction ophthalmique spécifique à l'utilisateur en incorporant pour chaque microstructure des valeurs Rx et Ry tenant compte de ladite correction ophthalmique (correction de la vision de l'utilisateur).

Afin de permettre en outre l'effet de vision à travers, une première pièce de guide optique comporte une zone d'extraction formée de microstructures obtenues comme précédemment décrit en relation avec les Figs. 4 à 8. Une seconde pièce de guide optique comporte des microstructures géométriquement complémentaires et vient en recouvrement de la première pièce. Les indices de réfraction des matériaux de la première pièce et de la deuxième pièce, ainsi que de la colle qui les assemble, sont sensiblement égaux afin d'assurer une continuité optique.

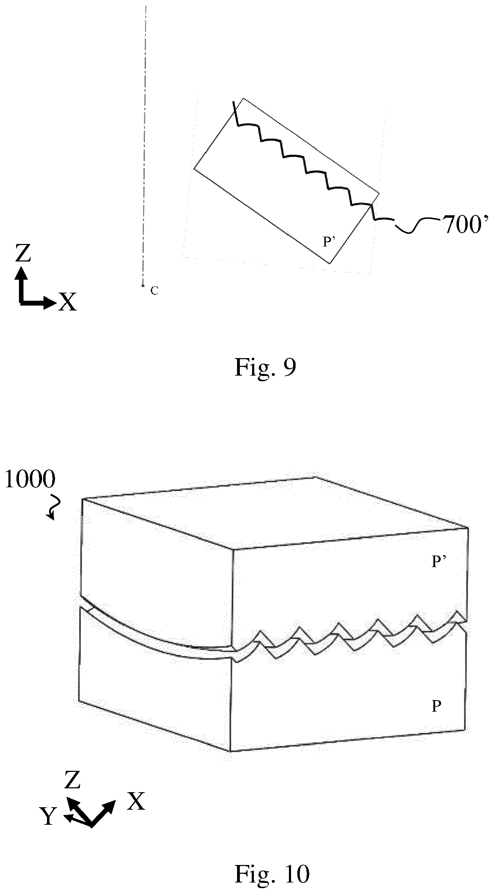

La **Fig. 9** illustre schématiquement le placement, par rapport à l'axe de rotation C, d'une autre pièce à usiner P', permettant de former sur sa surface des microstructures géométriquement complémentaires à celles obtenues en opérant le poste de tournage diamant conformément à la Fig. 7.

Sur le schéma de la Fig. 9, cette autre pièce à usiner P' est placée de la façon suivante sur le poste de tournage diamant 300 :

- cette autre pièce à usiner P' est placée à une distance D' de l'axe C de rotation du tambour 304, la distance D' étant la distance qui sépare l'axe C et un repère fixe relativement à l'ensemble de microstructures à usiner. Ce repère fixe est le même repère, relativement à la pièce P', que celui utilisé pour la distance D relativement à la pièce P, de sorte que les microstructures de la pièce P' soient usinées pour permettre leur placement en regard de celles de la pièce P. La distance D' est identique à la distance D. Préférentiellement, ce repère fixe est le centre géométrique de l'ensemble de microstructures à usiner. Il convient de noter que la distance D' est limitée par les capacités physiques du poste de tournage diamant 300, notamment la dimension du tambour 304, ainsi que par les dimensions de la pièce P'.

- la pièce à usiner P' est placée de telle sorte qu'il y a un angle Oméga = π-Thêta entre l'axe C et le profil de découpe des surfaces de microstructures qui sont destinées à être placées en regard des surfaces actives A des microstructures de la pièce P.

En d'autres termes, l'angle Thêta étant comme suit :

$$\text{Oméga} = \pi - \text{Thêta} = \pi - \arccos(D / Ry) = \pi - \arccos(D' / Ry)$$

Il convient de noter ici que le rayon Ry appliqué à l'usinage de la pièce P' est identique à celui appliqué à l'usinage de la pièce P, afin d'obtenir des microstructures qui sont géométriquement complémentaires.

La pièce P' est usinée en suivant un profil de découpe 700', comme illustré sur la Fig. 9. Sur la Fig. 9, la pièce P' est représentée de l'autre côté de l'axe C par rapport à la pièce P représentée sur la Fig. 7 (l'usinage fait que la pièce tourne autour de l'axe C).

Ainsi, avec ce positionnement de la pièce P' qui tient compte du positionnement de la pièce P, si les surfaces passives B de la pièce P font face à l'axe C selon le positionnement de la pièce P et le profil de découpe 700, le positionnement de la pièce P' et le profil de découpe 700' font que les surfaces de microstructures de la pièce P' qui sont destinées à être placées en regard desdites surfaces passives B des microstructures de la pièce P sont dos à l'axe C.

Le profil de découpe 700' est géométriquement complémentaire du profil de découpe 700 utilisé pour usiner les microstructures en surface de la pièce P. Ainsi, sur la Fig. 9 apparaît la forme concave des surfaces qui sont destinées à être placées en regard des surfaces actives A des microstructures de la pièce P, qui, elles, ont une forme convexe sur la Fig. 7. En suivant le profil de découpe 700', la partie haute de la pièce P' sur la Fig. 9 est abrasée lors du tournage diamant.

La **Fig. 10** illustre schématiquement une mise en regard des microstructures des deux pièces P et P' de la Fig. 9 après usinage. Un guide optique 1000 permettant l'effet de vision à travers (colle omise sur la Fig. 10) et, en superposition, l'extraction de l'image transportée est ainsi réalisée. Comme apparent sur la Fig. 10, l'inclinaison des pièces P et P' selon les angles Thêta et Oméga (respectivement) entraîne une variation d'épaisseur, caractéristique du procédé utilisé pour fabriquer les microstructures (ou leurs inserts).

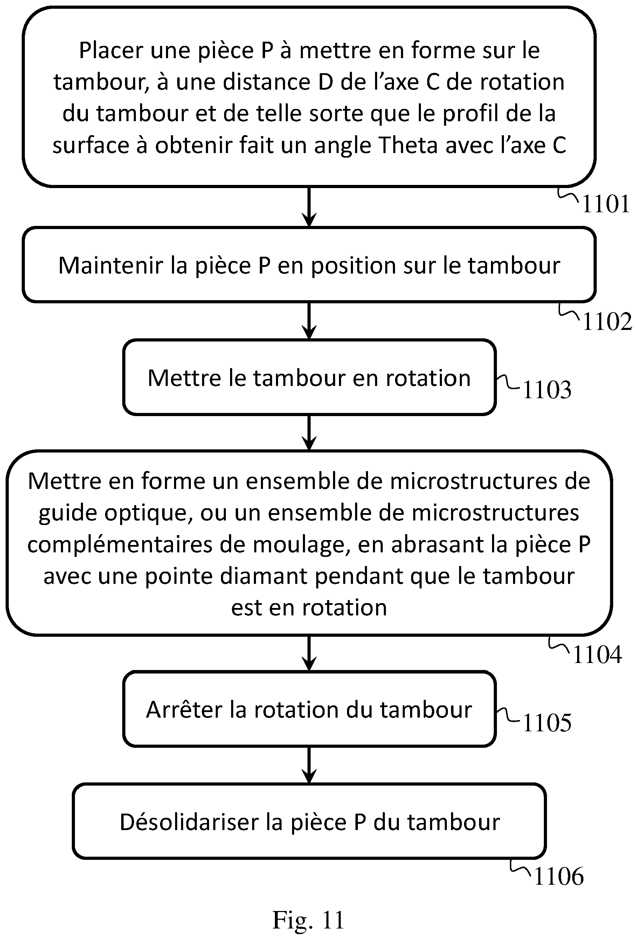

La **Fig. 11** illustre schématiquement des étapes de procédé de fabrication de microstructures de zone d'extraction de guide optique, ou d'insert pour le moulage de telles microstructures de zone d'extraction de guide optique.

Dans une étape 1101, la pièce P est positionnée sur le tambour 304 du poste de tournage diamant 300 :

- la pièce à usiner P est décalée d'une distance D de l'axe de rotation du tambour 304, la distance D étant la distance qui sépare l'axe C et le centre géométrique de l'ensemble de microstructures à usiner ;
- la pièce à usiner P est placée de telle sorte qu'il y a un angle moyen Thêta = arccos (D / Ry) entre l'axe C et le profil de découpe des surfaces actives A à former.

Dans une étape 1102, la pièce P est maintenue en position sur le tambour. Un contrepoids peut être ajouté pour compenser le décalage de masse dû au placement de la pièce de manière désaxée par rapport à l'axe C du tambour et ainsi éviter des vibrations induites.

Ainsi, la pièce à usiner P est placée et maintenue en position comme schématiquement illustré sur la Fig. 4 ou sur la Fig. 7.

Dans une étape 1103, le tambour est mis en rotation autour de l'axe C.

Dans une étape 1104, la découpe par pointe diamant est effectuée, et la pointe diamant est déplacée selon le profil de découpe souhaité. Les microstructures de zone d'extraction de guide optique, ou d'insert pour le moulage de telles microstructures de zone d'extraction de guide optique, sont ainsi réalisées.

Dans une étape 1105, la rotation du tambour est arrêtée.

Dans une étape 1106, la pièce P est désolidarisée du tambour.

La pièce P ainsi réalisée peut donc servir à la réalisation d'un guide optique et plus particulièrement à la réalisation de microstructures de zone d'extraction, ou de leurs microstructures complémentaires (comme selon le principe de la Fig. 10), ou de leur insert utilisé dans des opérations de moulage et d'injection plastique. En étant réalisée par tournage diamant, la fabrication de ces microstructures, telle que divulguée ici, est significativement plus rapide qu'avec l'usinage diamant en ligne droite (étau limeur). Des formes (cylindriques, tronconiques) légèrement différentes de celles idéalement requises (respectivement planes, sphériques) pour une application optique donnée sont obtenues. Cette différence de forme générale de chaque microstructure n'entraîne pas de déformation de la vision à travers. En effet, les rayons de la vision à travers (vision de la scène extérieure) ne font que traverser la structure de forme sphérique sans subir de modification de puissance optique ou aucune déformation, étant donné que les indices de réfraction de la première pièce du guide optique (servant au transport de l'image injectée), de la deuxième pièce du guide optique (fournissant les microstructures complémentaires), et de la colle qui les assemble sont sensiblement égaux. Quant à l'image extraite, cette réalisation assure que ses rayons lumineux sont certes légèrement déviés, en accord avec la courbure des surfaces actives A, mais restent parallèles entre eux pour chaque pixel image lors de leur transport par guidage dans le guide optique.

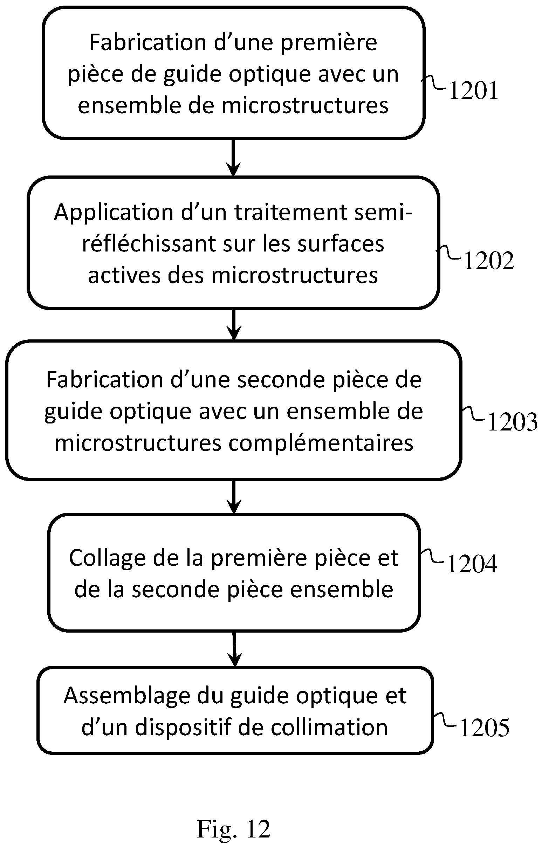

La **Fig. 12** illustre schématiquement des étapes de procédé de fabrication d'un guide optique comportant deux pièces, une première pièce comportant des microstructures de zone d'extraction obtenues en appliquant le procédé de la Fig. 11 et une seconde pièce comportant des microstructures géométriquement complémentaires.

Dans une étape 1201, une première pièce de guide optique est fabriquée, par exemple par usinage d'une pièce P en plastique, en verre ou par procédé d'injection plastique. La première pièce comporte des microstructures en surface qui servent à l'extraction d'une image injectée dans le guide optique. Les microstructures, ou un insert de moulage de ces microstructures, sont obtenues comme détaillé précédemment, plus particulièrement en relation avec la Fig. 11.

Ainsi, les microstructures de la Fig. 6 ou de la Fig. 8 sont obtenues.

Dans une étape 1202, un traitement semi-réfléchissant (dépôt) est appliqué sur les surfaces actives des microstructures obtenues durant l'étape 1201.

Dans une étape 1203, une deuxième pièce de guide optique est fabriquée, par exemple par usinage d'une pièce P en plastique, en verre ou par procédé d'injection plastique, comme pour la première pièce fabriquée à l'étape 1201. La deuxième pièce comporte des microstructures en surface qui sont géométriquement complémentaires à celles de la première pièce. Ces microstructures complémentaires, ou un insert de moulage de ces microstructures complémentaires, sont préférentiellement obtenues comme détaillé précédemment, plus particulièrement en relation avec les Figs. 9 et 11.

Dans une étape 1004, la première pièce fabriquée à l'étape 1001 et la deuxième pièce fabriquée à l'étape 1003 sont collées ensemble, les microstructures en surface de la première pièce étant collées en regard de leurs microstructures complémentaires en surface de la deuxième pièce, comme illustré sur la Fig. 10. Les indices de réfraction des matériaux utilisés pour fabriquer la première pièce et la deuxième pièce, et de la colle qui les assemble, sont sensiblement égaux afin d'assurer une continuité optique.

Ensuite, un dispositif optique peut être fabriqué en adjoignant un dispositif de collimation au guide optique. Un assemblage du guide optique et du dispositif de collimation est ainsi effectué, de sorte que le dispositif de collimation injecte une image, sous forme de faisceau collimaté à l'infini, par une zone d'injection du guide optique, et de sorte que cette image est transportée par réflexions totales internes successives jusqu'à une zone d'extraction du guide optique où les microstructures collées sont agencées pour extraire l'image du guide optique en superposition d'un effet de vision à travers. L'assemblage obtenu reprend celui de la Fig. 2B, le guide optique et ses microstructures étant toutefois fabriqués comme précédemment décrit en relation avec la Fig. 11.

L'assemblage du guide optique et du dispositif de collimation peut ensuite être intégré, avec une source d'image lumineuse, dans un dispositif de réalité augmentée, tel que des lunettes informatives.

**Revendications**

1. Procédé de fabrication d'un ensemble de microstructures (601) de guide optique, ou de son insert de moulage, par emploi d'un poste de tournage diamant (300) muni d'un tambour (304) actionnable en rotation autour d'un axe C et d'une pointe diamant (500), chaque microstructure étant de forme prismatique à deux surfaces avec une première surface, appelée ici surface active (602), destinée à recevoir un traitement semi-réfléchissant pour extraire une image injectée et propagée par réflexions totales internes successives dans le guide optique et une seconde surface, appelée surface passive (603), sans traitement réfléchissant, les microstructures étant juxtaposées les unes aux autres, le procédé de fabrication étant **caractérisé en ce qu'**il comporte les étapes suivantes :

   - installer une pièce P à usiner sur le tambour comme suit :

      - la pièce à usiner P est décalée d'une distance D de l'axe de rotation du tambour, la distance D étant la distance qui sépare l'axe C et un repère fixe relativement à l'ensemble de microstructures à usiner ;
      - la pièce à usiner P est placée de telle sorte qu'il y a un angle moyen Thêta entre l'axe C et un profil de découpe (400) correspondant aux surfaces actives, l'angle Thêta étant comme suit :

$$\text{Thêta} = \arccos\left(D / Ry\right)$$

      où Ry est un rayon de courbure souhaitée selon la direction longue des microstructures ;

   - déplacer la pointe diamant selon le profil de découpe (400) des microstructures en actionnant la rotation du tambour de sorte à usiner l'ensemble des microstructures en surface de la pièce à usiner P.

2. Procédé selon la revendication 1, dans lequel ledit repère fixe est le centre géométrique de l'ensemble de microstructures à usiner.

3. Procédé selon la revendication 1 ou 2, dans lequel le rayon Ry tend vers l'infini et la pièce P à usiner est placée selon un angle moyen Thêta égal à 90° de sorte à former des surfaces actives planes.

4. Procédé selon la revendication 1 ou 2, dans lequel le profil de découpe des surfaces actives forme un arc de cercle d'un rayon Rx et la pièce P à usiner est placée selon un angle moyen Thêta inférieur à 90° de sorte à former des surfaces actives concaves.

5. Procédé selon la revendication 1 ou 2, dans lequel le profil de découpe des surfaces actives forme un arc de cercle d'un rayon Rx et la pièce P à usiner est placée selon un angle moyen Thêta supérieur à 90° de sorte à former des surfaces actives convexes.

6. Procédé selon l'une quelconque des revendications 4 et 5, dans lequel le rayon Rx et le rayon Ry sont de même valeur.

7. Procédé selon l'une quelconque des revendications 4 et 5, dans lequel le rayon Rx et le rayon Ry sont de valeurs différentes.

8. Procédé de fabrication d'un guide optique comportant les étapes suivantes :

   - fabriquer une première pièce en surface de laquelle un ensemble de microstructures est formé en application du procédé selon l'une quelconque des revendications 1 à 7 ;
   - appliquer un traitement semi-réfléchissant sur des surfaces des microstructures destinées à extraire une image injectée et propagée par réflexions totales internes successives dans le guide optique ;

- fabriquer une deuxième pièce en surface de laquelle est formé un ensemble de microstructures complémentaires aux microstructures de la première pièce ;
- coller la première pièce et la seconde pièce ensemble, les microstructures en surface de la première pièce étant collées en regard de leurs microstructures complémentaires en surface de la deuxième pièce.

9. Procédé selon la revendication 8, comportant les étapes suivantes pour fabriquer la deuxième pièce :

- installer une autre pièce P' à usiner sur le tambour comme suit :

- l'autre pièce à usiner P' est décalée d'une distance D' de l'axe de rotation du tambour, la distance D' étant identique à la distance D utilisée pour fabriquer la première pièce ;
- l'autre pièce à usiner P' est placée de telle sorte qu'il y a un angle moyen Oméga entre l'axe C et un autre profil de découpe correspondant aux surfaces destinées à être placée en regard des surfaces actives des microstructures de la première pièce, l'angle Oméga étant comme suit :

$$\text{Oméga} = \pi - \text{Thêta} = \pi - \arccos(D / R_y)$$

- déplacer la pointe diamant selon ledit autre profil de découpe des microstructures en actionnant la rotation du tambour de sorte à usiner l'ensemble des microstructures en surface de l'autre pièce à usiner P', ledit autre profil de découpe étant géométriquement complémentaire du profil de découpe utilisé pour usiner la première pièce.

10. Procédé de fabrication d'un dispositif optique comportant les étapes suivantes :

- fabriquer un guide optique en application du procédé selon la revendication 8 ; et
- assembler le guide optique et un dispositif de collimation, de sorte que le dispositif de collimation injecte une image, sous forme de faisceau collimaté à l'infini, par une zone d'injection du guide optique, que cette image est transportée par réflexions totales internes successives jusqu'à une zone d'extraction du guide optique où les microstructures collées sont agencées pour extraire l'image du guide optique en superposition d'une vision à travers.

**Patentansprüche**

1. Verfahren zur Herstellung einer Anordnung von Mikrostrukturen (601) für Lichtleiter oder ihres Formeinsatzes unter Verwendung eines, mit einer Trommel (304) ausgestatteten, durch Rotation um eine Achse C betätigbaren Diamantdrehaggregats (300) und einer Diamantspitze (500), wobei jede Mikrostruktur eine prismatische zweiflächige Form aufweist mit einer ersten Fläche, hier die aktive Fläche genannt (602), die dazu bestimmt ist, eine teilreflektierende Behandlung zu erhalten, um ein in den Lichtleiter injiziertes und durch aufeinanderfolgende interne totale Reflektionen verbreitetes Bild zu extrahieren, und eine zweite Fläche, hier die passive Fläche (603) genannt, ohne reflektierende Behandlung, wobei die Mikrostrukturen nebeneinander liegen, wobei das Herstellungsverfahren **dadurch gekennzeichnet** ist, das es die folgenden Schritte umfasst:

- Installieren eines zu bearbeitenden Werkstücks P auf der Trommel wie folgt:

- das Werkstück P ist um einen Abstand D zur Rotationsachse der Trommel versetzt, wobei der Abstand D der Abstand ist, der die Achse C und eine feste Markierung bezogen auf die zu bearbeitende Anordnung von Mikrostrukturen voneinander trennt,
- das Werkstück P ist so platziert, dass sich ein, den aktiven Flächen entsprechender mittlerer Winkel Thêta zwischen der Achse C und dem Schneidprofil (400) bildet, wobei der Winkel Thêta folgender ist:

$$\text{Thêta} = \arccos(D / R_y)$$

wobei $R_y$ ein gewünschter Krümmungsradius in Längsrichtung der Mikrostrukturen ist,

- Bewegen der Diamantspitze gemäß dem Schneidprofil (400) der Mikrostrukturen durch Betätigen der Rotation der Trommel, so dass die Oberfläche der Mikrostrukturanordnung des Werkstücks P bearbeitet wird.

2. Verfahren gemäß Anspruch 1, in dem die genannte feste Markierung der geometrische Mittelpunkt der zu bearbeitenden Mikrostrukturanordnung ist.

3. Verfahren gemäß Anspruch 1 oder 2, in dem der Radius y ins Unendliche tendiert und das Werkstück P gemäß einem mittleren Winkel Thêta gleich 90° platziert ist, so dass es aktive ebene Flächen bildet.

4. Verfahren gemäß Anspruch 1 oder 2, in dem das Schneidprofil der aktiven Flächen einen Kreisbogen mit einem Radius Rx bildet und das Werkstück P gemäß eines mittleren Winkels Thêta von unter 90° platziert ist, so dass konkave aktive Flächen gebildet werden.

5. Verfahren gemäß Anspruch 1 oder 2, in dem das Schneidprofil der aktiven Flächen einen Kreisbogen mit einem Radius Rx bildet und das Werkstück P gemäß eines mittleren Winkels Thêta von über 90° platziert ist, so dass konvexe aktive Flächen gebildet werden.

6. Verfahren gemäß Anspruch 1 oder 2, in dem der Radius Rx und der Radius Ry den selben Wert aufweisen.

7. Verfahren gemäß einem der Ansprüche 4 und 5, in dem der Radius Rx und der Radius Ry unterschiedliche Werte aufweisen.

8. Verfahren zur Herstellung eines Lichtleiters umfassend die folgenden Schritte :

   - ein erstes Werkstück herstellen, in dessen Oberfläche eine Anordnung von Mikrostrukturen unter Anwendung des Verfahrens nach einem der Ansprüche 1 - 7 gebildet ist,
   - eine teilreflektierende Behandlung auf Flächen auftragen, die dazu bestimmt sind, ein in den Lichtleiter injiziertes und durch aufeinanderfolgende totale interne Reflektionen verbreitetes Bild zu extrahieren,
   - ein zweites Werkstück herstellen, in dessen Oberfläche eine Anordnung aus Mikrostrukturen gebildet ist, die komplementär zu den Mikrostrukturen des ersten Werkstücks ist,
   - das erste Werkstück mit dem zweiten Werkstück zusammenkleben, wobei die Mikrostrukturen in der Oberfläche des ersten Werkstücks mit den komplementären Mikrostrukturen in der Oberfläche des zweiten Werkstücks zusammengeklebt werden.

9. Verfahren gemäß Anspruch 8, beinhaltend die folgenden Schritte zur Herstellung des zweiten Werkstücks :

   - ein weiteres Werkstück P' wie folgt auf der Trommel installieren :

   - das weitere Werkstück P' ist um einen Abstand D' zu der Rotationsachse der Trommel versetzt, wobei der Abstand D' identisch mit dem zur Herstellung des ersten Werkstücks verwendeten Abstand D ist,
   - das weitere Werkstück P' ist so platziert, dass ein mittlerer Winkel Oméga zwischen der Achse C und einem weiteren Schneidprofil entsteht, das den Flächen entspricht, die dazu bestimmt sind, gegenüber den aktiven Oberflächen der Mikrostrukturen des ersten Werkstücks platziert zu werden, wobei der Winkel Oméga folgender ist:

$$\text{Oméga} = \text{л} - \text{Thêta} = \text{л} - \arccos(D/Ry)$$

   - die Diamantspitze entsprechend des genannten weiteren Schneidprofils der Mikrostrukturen durch Betätigung der Rotation der Trommel bewegt wird, so dass die Anordnung der Mikrostrukturen in der Oberfläche des weiteren Werkstücks P' bearbeitet wird, wobei das genannte weitere Schneidprofil geometrisch komplementär zu dem zur Bearbeitung des ersten Werkstücks verwendeten Schneidprofils ist.

10. Verfahren zur Herstellung einer optischen Vorrichtung umfassend die folgenden Schritte :

   - einen Lichtleiter unter Anwendung des Verfahrens gemäß Anspruch 8 herstellen, und
   - den Lichterleiter und eine Kollimierungsvorrichtung zusammensetzen, so dass die Kollimierungsvorrichtung ein Bild in Form eines unendlich kollimierten Strahls durch einen Injektionsbereich des Lichtleiters injiziert, so dass dieses Bild durch aufeinanderfolgende totale interne Reflektionen bis zu einem Extraktionsbereich des Lichtleiters transportiert wird, wo die zusammengeklebten Mikrostrukturen angeordnet sind, um das Bild aus dem Lichterleiter durch Überlagerung einer Durchsicht zu extrahieren.

**Claims**

1. Method for manufacturing a set of optical-guide microstructures (601), or of its moulding insert, by using a diamond turning station (300) provided with a drum (304) that can be rotated about an axis C and a diamond tip (500), each microstructure having a prismatic shape with two surfaces with a first surface, here called active surface (602), intended to receive a semi-reflective treatment to extract an image injected and propagated by successive total internal reflections in the optical guide, and a second surface, called passive surface (603), without reflective treatment, the microstructures being juxtaposed with each other, the manufacturing method being **characterised in that** it comprises the following steps:

    - installing a piece P to be machined on the drum as follows:

        - the piece P to be machined is offset by a distance D from the rotation axis of the drum, the distance D being the distance that separates the axis C and a reference frame fixed in relation to the set of microstructures to be machined;
        - the piece P to be machined is placed so that there is a mean angle Theta between the axis C and a cutting profile (400) corresponding to the active surfaces, the angle Theta being as follows:

$$\text{Theta} = \arccos (D/Ry)$$

        where Ry is a required radius of curvature in the long direction of the microstructures;

        - moving the diamond tip along the cutting profile of the microstructures by actuating the rotation of the drum so as to machine all the microstructures on the surface of the piece P to be machined.

2. Method according to claim 1, wherein said fixed reference frame is the geometric centre of the set of microstructures to be machined.

3. Method according to claim 1 or 2, wherein the radius Ry tends towards infinity and the piece P to be machined is placed at a mean angle Theta equal to 90° so as to form planar active surfaces.

4. Method according to claim 1 or 2, wherein the cutting profile of the active surfaces forms an arc of a circle with radius Rx and the piece P to be machined is placed at a mean angle Theta of less than 90° so as to form concave active surfaces.

5. Method according to claim 1 or 2, wherein the cutting profile of the active surfaces forms an arc of a circle of a radius Rx and the piece P to be machined is placed at a mean angle Theta greater than 90° so as to form convex active surfaces.

6. Method according to either one of claims 4 and 5, wherein the radius Rx and the radius Ry have the same value.

7. Method according to either one of claims 4 and 5, wherein the radius Rx and the radius Ry have different values.

8. Method for manufacturing an optical guide comprising the following steps:

    - manufacturing a first piece on the surface of which a set of microstructures is formed by applying the method according to any one of claims 1 to 7;
    - applying a semi-reflective treatment to the surfaces of the microstructures intended to extract an image injected and propagated by successive total internal reflections in the optical guide;
    - manufacturing a second piece on the surface of which a set of microstructures complementary to the microstructures of the first piece is formed;
    - gluing the first piece and the second piece together, the microstructures on the surface of the first piece being glued facing their complementary microstructures on the surface of the second piece.

9. Method according to claim 8, comprising the following steps for manufacturing the second piece:

- installing another piece P' to be machined on the drum as follows:

- the other piece P' to be machined is offset by a distance D' from the rotation axis of the drum, the distance D' being identical to the distance D used for manufacturing the first piece;
- the other piece P' to be machined is placed so that there is a mean angle Omega between the axis C and another cutting profile corresponding to the surfaces intended to be placed facing the active surfaces of the microstructures of the first piece, the angle Omega being as follows:

$$\text{Omega} = \pi - \text{Theta} = \pi - \arccos(D/Ry)$$

- moving the diamond tip along said other cutting profile of the microstructures by actuating the rotation of the drum so as to machine all the microstructures on the surface of the other piece P' to be machined, said other cutting profile being geometrically complementary to the cutting profile used for machining the first piece.

10. Method for manufacturing an optical device comprising the following steps:

- manufacturing an optical guide by applying the method according to claim 8; and
- assembling the optical guide and a collimation device, so that the collimation device injects an image, in the form of a beam collimated to infinity, through an injection zone of the optical guide, so that this image is transported by successive total internal reflections as far as an extraction zone of the optical guide where the glued microstructures are arranged to extract the image from the optical guide in see-through superimposition.

Fig. 1

Fig. 2A

Fig. 2B

Fig. 3

Fig. 4

500

400

Z X

P

Fig. 5

601

603 602

600

Z Y X

Fig. 6

Fig. 7

Fig. 8

Fig. 9

Fig. 10

Placer une pièce P à mettre en forme sur le tambour, à une distance D de l'axe C de rotation du tambour et de telle sorte que le profil de la surface à obtenir fait un angle Theta avec l'axe C

1101

Maintenir la pièce P en position sur le tambour

1102

Mettre le tambour en rotation

1103

Mettre en forme un ensemble de microstructures de guide optique, ou un ensemble de microstructures complémentaires de moulage, en abrasant la pièce P avec une pointe diamant pendant que le tambour est en rotation

1104

Arrêter la rotation du tambour

1105

Désolidariser la pièce P du tambour

1106

Fig. 11

Fabrication d'une première pièce de guide optique avec un ensemble de microstructures ⌐1201

Application d'un traitement semi-réfléchissant sur les surfaces actives des microstructures ⌐1202

Fabrication d'une seconde pièce de guide optique avec un ensemble de microstructures complémentaires ⌐1203

Collage de la première pièce et de la seconde pièce ensemble ⌐1204

Assemblage du guide optique et d'un dispositif de collimation ⌐1205

Fig. 12

**EP 4 046 784 B1**

## RÉFÉRENCES CITÉES DANS LA DESCRIPTION

**Documents brevets cités dans la description**

- WO 2009074638 A1
- WO 2012136470 A1
- US 2014140091 A